# EUROPÄISCHE PATENTANMELDUNG

(11) **EP 0 799 746 A2**
(43) Veröffentlichungstag der Anmeldung: **08.10.1997**
(21) Anmeldenummer: 97104748.5
(22) Anmeldetag: 20.03.1997
(51) Int. Cl.: B60R 1/06

(54) **Aussenrückblickspiegel für Kraftfahrzeuge, insbesondere Nutzfahrzeuge**

(30) Priorität: 06.04.1996 DE 29606416 U
(71) Anmelder: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE)
(74) Vertreter: Hübner, Gerd, Dipl.-Phys.

(57) **Zusammenfassung**

Ein Rückblickspiegel für Kraftfahrzeuge ist versehen mit
- einem Gehäuse (2),
- einer im Gehäuse (2) vorzugsweise schwenkbar gelagerten Spiegelscheibe (8),
- einer auf der Rückseite (12) der Spiegelscheibe (8) liegenden, zu deren Beheizung dienenden Heizfolie (13), die mindestens einen isolierenden Folienträger (14) und eine darauf aufgebrachte, mit Heizstrom beaufschlagbare Leiterbahn (15) aufweist und
- einer isoliert von der Heizleiterbahn (15) auf die Heizfolie (13) aufgebrachten Antennen-Leiterbahn (19) zum Empfang und/oder Senden von Radio-, Mobilfunk-, Navigationssignalen oder dergleichen.

## Beschreibung

Die Erfindung betrifft einen Außenrückblickspiegel für Kraftfahrzeuge mit den im Oberbegriff des Anspruches 1 angegebenen Merkmalen.

Derartige Außenrückblickspiegel insbesondere in ihrer Verwendung als Lkw-Außenspiegel sind üblich und weit verbreitet. Die in dem Gehäuse sitzende oder vorzugsweise schwenkbar darin gelagerte Spiegelscheibe ist dabei zum Verhindern des Beschlagens oder Vereisens oftmals beheizbar ausgelegt, wozu auf der Rückseite der Spiegelscheibe eine Heizfolie angebracht ist. Diese Heizfolie kann auf die Spiegelrückseite geklebt oder - bei Verwendung einer sogenannten Spiegeltragplatte - zwischen der Spiegelscheibe und der diese haltenden Spiegeltragplatte eingesetzt sein. Ganz allgemein weisen solche Heizfolien mindestens einen isolierenden Folienträger und eine darauf aufgebrachte mit Heizstrom beaufschlagbare, entsprechend den jeweiligen Spiegel-Gegebenheiten geformte Leiterbahn auf.

Eine bei Kraftfahrzeugen jeder Art nun grundsätzlich gegebene Problematik liegt darin, eine Antenne zum Empfang von Radioprogrammen, Mobilfink, Navigationssignalen oder dergleichen unter verschiedensten Gesichtspunkten möglichst optimal am Fahrzeug anzubringen. Neben einer mechanisch-konstruktiv möglichst einfachen, dabei aber sicheren Realisieiung der Antenne sollte diese einerseits möglichst weit weg von Funkstörquellen im Fahrzeug, andererseits möglichst nahe am Empfangs- bzw. Sendegerät angeordnet werden. Auch der Schutz der Antenne gegen Beschädigungen beispielsweise beim Durchfahren von Waschanlagen oder durch Vandalismus ist zu beachten.

Zur Lösung der vorstehend erörterten Problematik schlägt die Erfindung laut Kennzeichnungsteil des Anspruches 1 vor, die Antenne als eine isoliert von der Heizleiterbahn auf die Heizfolie aufgebrachte Antennen-Leiterbahn zum Empfang und/oder Senden von Radio-, Mobilfunk-, Navigationssignalen oder dergleichen zu realisieren. Durch diese Konstruktion ist die Antenne innerhalb des Spiegelgehäuses angeordnet und somit vor unbefugten Zugriffen geschützt. In funktechnischer Hinsicht ist die Anbringung am Spiegel ebenfalls vorteilhaft, da hier ein günstiger Kompromiß zwischen möglichst großem Abstand zu Störquellen und möglichst geringem Abstand zur Sende- bzw. Empfangsanlage erreicht wird. Ferner ist von Vorteil, daß die Antenne als solche zusammen mit der Heizfolie als Zulieferteil herstellbar ist. Die eigentliche Endmontage ist dann - bis auf die Anbringung der Antennenschlüsse - mit keinerlei Fertigungsaufwand mehr verbunden, da die kombinierte Heizfolie/Antenne in einem Arbeitgang montiert wird.

Anspruch 2 lehrt unterschiedliche Alternativen für die Aufbringung der Antennen-Leiterbahn auf die Heizfolie. Die Leiterbahn kann aufgeprägt, aufkaschiert oder aufgedruckt sein. Beim Prägen wird die Leiterbahn aus dünner Aluminiumfolie gestanzt und das Stanzteil unter Druck auf eine isolierende Oberfläche der Heizfolie gepreßt. Beim Kaschieren wird ein entsprechender Leiterbahnzuschnitt mit einem Klebstoff dauerhaft mit der Heizfolienoberfläche verbunden. Beim Aufdrucken wird entsprechend eine elektrisch leitfähige Druckfarbe verwendet.

Durch die im Anspruch 3 angegebene Abschirmlage zwischen der Antennen-Leiterbahn und den Heiz-Leiterbahnen der Heizfolie wird das Sende- und/oder Empfangsverhalten der Antenne verbessert, da sich vom Heizstrom hervorgerufene Störungen aufgrund der Abschirmlage nicht zur Antennen-Leiterbahn fortpflanzen können. Um eine wirkungswolle Masseverbindung der Abschirmlage zu gewährleisten, ist diese laut Anspruch 4 mit der Abschirmung eines zum Anschluß der Antennen-Leiterbahn dienenden Antennen-Koaxialkabels gekoppelt.

Der nebengeordnete unabhängige Anspruch 6 sieht eine vom Grundtyp mit dem Gegenstand des Anspruches 1 übereinstimmende Antennenausbildung in Form einer auf einen flächigen Träger aufgebrachten Antennen-Leiterbahn vor. Abweichend dient jedoch hier als Träger nicht die Heizfolie, sondern eine bei modernen Spiegeltypen vielfach verwendete Spiegeltragplatte als Träger für die Antennen-Leiterbahn vor. Solche Spiegeltragplatten halten das Spiegelglas und weisen die insbesondere für eine Schwenklagerung notwendigen konstruktiven Elemente auf. Letztere können an der in der Regel aus gespritztem Kunststoff gefertigten Spiegeltragplatte natürlich einfacher ausgeformt und angebracht werden, als an der Spiegelscheibe selbst.

Durch den Gegenstand des Anspruches 6 wird der Spiegeltragplatte nun eine weitere Funktion zugewiesen, nämlich die eines Antennenträgers.

Vorteilhafterweise ist dabei die Antennen-Leiterbahn auf die der Spiegelscheibe abgewandte Rückseite der Spiegelträgerplatte aufgebracht. Nach Anspruch 8 kann die Spiegeltragplatte gleichzeitig als Halterung für ein Anschlußelement (z.B. eine Anschlußfahne) für die Antennen-Leiterbahn dienen, indem das Anschlußelement in der Spiegeltragplatte verankert (z.B. vernietet) ist.

Um die Antennen-Leiterbahn vor äußeren Einflüssen sowohl mechanischer als auch elektrischer Natur zu schützen, ist die Antennen-Leiterbahn auf ihrer Oberseite mit einer Isolierabdeckung versehen (Anspruch 9).

Weitere Merkmale, Einzelheiten und Vorteile der Erfindung sind der nachfolgenden Beschreibung entnehmbar, in der Ausführungsbeispiele des Erfindungsgegenstandes näher erläutert werden. Es zeigen:
- Fig. 1: eine schematische Ansicht eines Außenspiegels mit aufgedruckter Antennenbahn in einer ersten Ausführungsform,
- Fig. 2: einen teilweisen, schematischen Schnitt durch die Spiegelscheibe entlang der Schnittlinie II-II nach Fig. 1,
- Fig. 3: eine Rückansicht einer Spiegeltragplatte mit darauf aufgebrachter Antennen-Leiterbahn und
- Fig. 4: einen Vertikalschnitt gemäß Schnittlinie IV-IV nach Fig. 3.

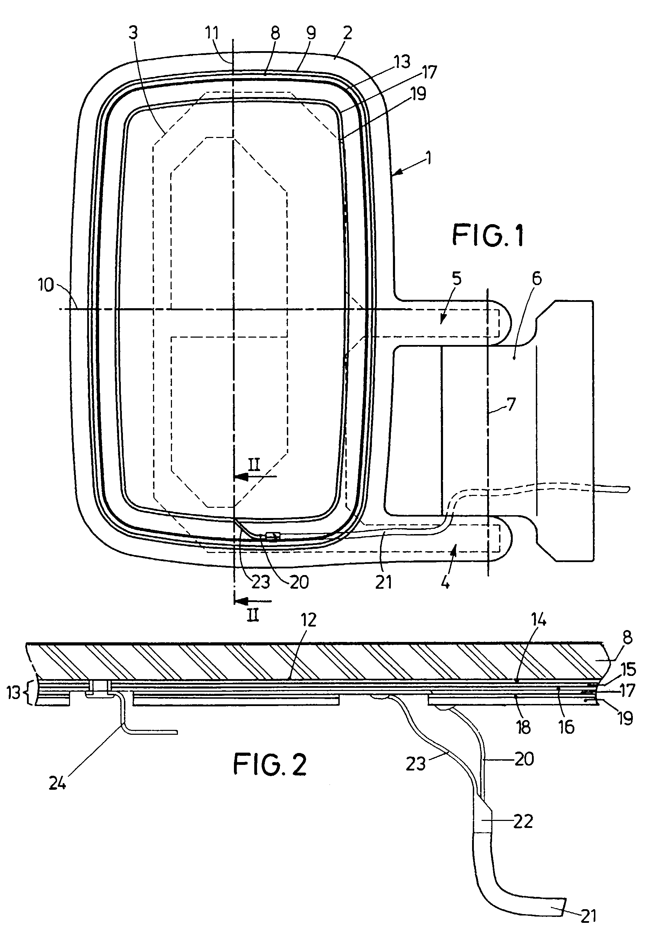

Der in Fig. 1 gezeigte Außenspiegel 1 weist ein als ganzes mit 2 bezeichnetes Gehäuse auf, das im wesentlichen als aerodynamische Verblendung wirkt. Als tragendes Teil ist eine nur schematisch angedeutete, in Fig. 1 strichliert dargestellte Trägerplatte 3 vorgesehen, die über Tragarme 4, 5 mit einem fahrzeugfesten Lagerbock 6 verbunden ist. Letzterer ist beispielsweise an der Fahrertür oder A-Säule eines Lkw befestigt. Die beiden Tragarme 4, 5 sind am Lagerbock 6 dabei um eine Schwenkachse 7 verschwenkbar gelagert.

Der Außenspiegel 1 weist ferner eine Spiegelscheibe 8 auf, die in eine Gehäuseöffnung 9 über eine nicht näher dargestellte Lagerkonstruktion um die beiden in Fig. 1 eingezeichneten vertikalen und horizontalen Hauptachsen 10, 11 verschwenkbar an der Trägerplatte 3 gelagert ist. Für diese Lagerkonstruktion sind verschiedenste Ausführungsformen einsetzbar und bekannt, die im vorliegenden Falle jedoch nicht näher zu erläutern sind, da diese keinen erfindungswesentlichen Charakter besitzen.

Auf der Rückseite 12 der Spiegelscheibe 8 ist eine kombinierte Heiz-Antennenfolie 13 aufgebracht, deren Umrißkontur in Fig. 1 stark herausgezeichnet ist. Deren schichtweiser Folienaufbau ist schematisch in Fig. 2 dargestellt. Ein isolierender, auf der Spiegelglasseite mit einem Klebstoff versehener Folienträger 14, der den Umriß der Heiz-Antennenfolie 13 bestimmt, ist mit einer mit Heizstrom beaufschlagbaren Leiterbahn 15 versehen, die in nicht näher dargestellter Weise z.B. mäanderartig über den Folienträger 14 verläuft. Die Anordnung und das Aufbringen solcher Heiz-Leiterbahnen ist aus dem Stand der Technik bekannt und üblich und bedarf daher keiner näheren Erörterung.

Unter Zwischenlage einer Isolierschicht 16 schließt sich eine flächige, elektrisch leitfähige Abschirmlage 17 an, deren Umriß in Fig. 1 ebenfalls mit einer durchgehenden Linie dargestellt ist. Diese Abschirmlage 17 kann beispielsweise aus einer aufkaschierten dünnen Aluminiumfolie bestehen.

Es schließt sich eine weitere aufgeklebte Isolierschicht 18 an, auf die eine ringförmige Antennen-Leiterbahn 19 aufgedruckt ist. Der in Fig. 1 wiederum mit durchgezogenen Linien dargestellte Ringverlauf der Antennen-Leitbahn 19 ist lediglich beispielhafter Natur. Die eigentliche Antennenkonfiguration wird sich nach den jeweiligen Sende- bzw. Empfangsbedingungen und -charakteristiken richten.

Wie in Fig. 2 schematisch angedeutet ist, ist die Antennen-Leiterbahn 19 mit dem Zentralleiter 20 eines Antennen-Koaxialkabels 21 verbunden, das durch den unteren Tragarm 4 und den Lagerbock 6 zur eigentlichen Sende- bzw. Empfangsanlage zum Fahrzeug geführt ist. Die elektrisch auf Masse liegende Abschirmung 22 des Koaxialkabels 21 ist über eine entsprechende Leitungsverbindung 23 mit der Abschirmlage 17 kurzgeschlossen, wodurch der durch die Heiz-Leiterbahn 15 laufende Heizstrom keine Auswirkungen auf die in der Antennen-Leiterbahn 19 anstehenden Antennensignale zeigt. Im übrigen ist die Heiz-Leiterbahn 15 mittels einer aufgenieteten Anschlußfahne 24 mit dem Heizstrom-Anschlußkabel 25 verbunden. Von letzterem ist in Fig. 2 lediglich ein Pol gezeigt.

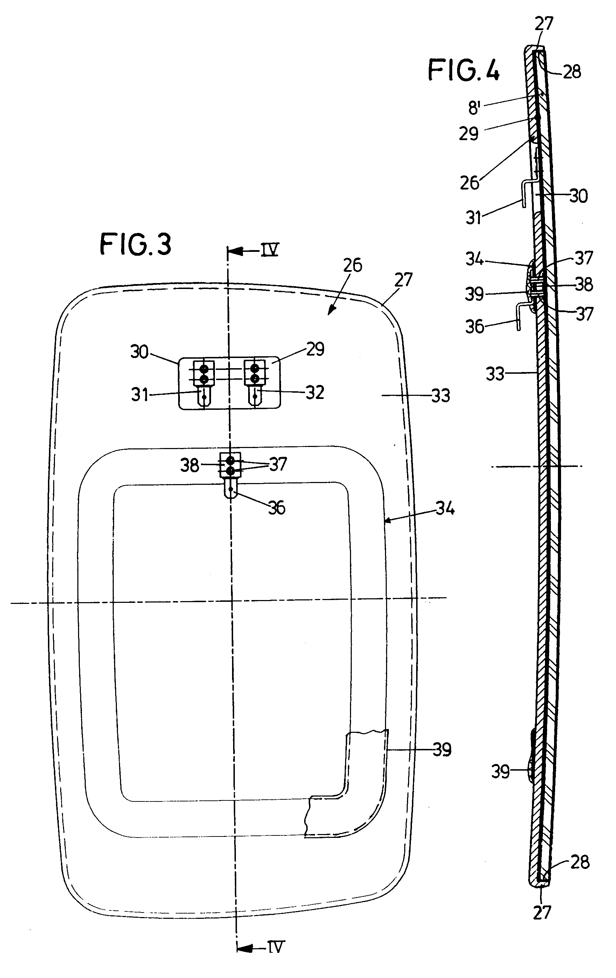

In den Fig. 3 und 4 ist eine Ausführungsform des Erfindungsgegenstandes gezeigt, wie sie bei einer Spiegelkonstruktion mit gesonderter Spiegeltragplatte 26 zum Einsatz kommt. Letztere wird in nicht näher dargestellter Weise beispielsweise auf die Lagerplatte eines Universal-Kugelgelenkes aufgerastet, das an einer Trägerplatte 3 des Spiegels ausgebildet ist. Die Spiegeltragplatte 26 hält die Spiegelscheibe 8', wobei durch einen umlaufenden Randsteg 27 die Spiegelscheibenränder 28 geschützt werden. Die Befestigung der Spiegelscheibe 8' in der Spiegeltragplatte 26 erfolgt durch eine doppelseitig klebende Heizfolie 29, die zwischen diesen beiden Bauteilen eingesetzt ist. In einem Durchbruch 30 der Spiegeltragplatte 26 sind die beiden auf die Heizfolie 29 aufgenieteten Anschlußfahnen 31, 32 der auf der Heizfolie 29 ausgebildeten (nicht näher dargestellten) Heizleiterbahn angeordnet.

Wie insbesondere aus Fig. 3 deutlich wird, ist auf der Rückseite 33 der Spiegeltragplatte 26 eine etwa rechteckige, ringförmig verlaufende Antennen-Leiterbahn 34 aufgedruckt, -kaschiert oder -geklebt.

Auf dem oberen Schenkel 35 der Antennen-Leiterbahn 34 sitzt eine weitere Anschlußfahne 36, die durch im Material der Spiegeltragplatte 26 verankerte Nieten 37 befestigt ist. Der Fuß 38 der Anschußfahne 36 liegt unterhalb einer Isolierabdeckung 39, die in Fig. 3 nur teilweise eingezeichnet ist, jedoch die Antennen-Leiterbahn 34 auf ihrer gesamten Länge abdeckt. Bei der Abdeckung 39 handelt es sich z.B. um ein Isolier-Klebeband.

## Patentansprüche

1. Rückblickspiegel für Kraftfahrzeuge mit
- einem Gehäuse (2),
- einer im Gehäuse (2) vorzugsweise schwenkbar gelagerten Spiegelscheibe (8) und
- einer auf der Rückseite (12) der Spiegelscheibe (8) liegenden, zu deren Beheizung dienenden Heizfolie (13), die mindestens einen isolierenden Folienträger (14) und eine darauf aufgebrachte, mit Heizstrom beaufschlagbare Leiterbahn (15) aufweist,
gekennzeichnet durch
- eine isoliert von der Heizleiterbahn (15) auf die Heizfolie (13) aufgebrachte Antennen-Leiterbahn (19) zum Empfang und/oder Senden von Radio-, Mobilfunk-, Navigationssignalen oder dergleichen.

2. Rückblickspiegel nach Anspruch 1, dadurch gekennzeichnet, daß die Antennen-Leiterbahn (19) auf die Heizfolie (13) aufgeprägt, aufkaschiert oder aufgedruckt ist.

3. Rückblickspiegel nach Anspruch 1 oder 2, dadurch gekennzeichnet, daß zwischen der Heiz-Leiterbahn (15) der Heizfolie (13) und der Antennen-Leiterbahn (19) eine elektrisch leitfähige Abschirmlage (17) eingebracht ist.

4. Rückblickspiegel nach Anspruch 3, dadurch gekennzeichnet, daß die Abschirmlage (17) mit der Abschirmung (22) eines zum Anschluß der Antennen-Leiterbahn (19) dienenden Antennenkabels (21) elektrisch verbunden ist.

5. Rückblickspiegel nach einem der Ansprüche 1 bis 4, dadurch gekennzeichnet, daß die Antennen-Leiterbahn (19) auf die der Spiegelscheibe abgewandte Seite der Heizfolie (13) aufgebracht ist.

6. Rückblickspiegel fuhr Kraftfahrzeuge mit
- einem Gehäuse (2),
- einer im Gehäuse (2) angebrachten Spiegeltragplatte (26), und
- eine Spiegelscheibe (8'), die auf der Spiegeltragplatte (26) gelagert ist,
gekennzeichnet durch
- eine auf die Spiegeltragplatte (26) aufgebrachte Antennen-Leiterbahn (34) zum Empfang und/oder Senden von Radio-, Mobilfunk-, Navigationssignalen oder dergleichen.

7. Rückblickspiegel nach Anspruch 6, dadurch gekennzeichnet, daß die Antennen-Leiterbahn (34) auf die der Spiegelscheibe (8') abgewandte Rückseite (33) der Spiegeltragplatte (26) aufgebracht ist.

8. Rückblickspiegel nach Anspruch 6 oder 7, dadurch gekennzeichnet, daß ein die Antennen-Leiterbahn (34) durchsetzendes Anschlußelement (36) für die leiterbahn (34) in der Spiegeltragplatte (26) verankert ist.

9. Rückblickspiegel nach einem der Ansprüche 6 bis 8, dadurch gekennzeichnet, daß die Antennen-Leiterbahn (34) auf ihrer Oberseite mit einer Isolierabdeckung (39) versehen ist.
